# NEW EUROPEAN PATENT SPECIFICATION

(11) **EP 1 493 693 B2**
(45) Date of publication and mention of the opposition decision: **07.10.2009**
(45) Mention of the grant of the patent: 10.01.2007
(21) Application number: 04076838.4
(22) Date of filing: 24.06.2004
(51) Int. Cl.: B65G 47/08

(54) **Automatic system for sorting and palletizing articles**
Automatisches System zum Sortieren und Palettieren von Artikeln
Systeme automatique pour le tri et la palettisation des articles

(30) Priority: 04.07.2003 IT RE20030069
(43) Date of publication of application: 05.01.2005
(73) Proprietor: Elettric 80 S.p.A., 42030 Viano, Reggio Emilia (IT)
(72) Inventor: Zirri, Francesco, c/o Elettric 80 S.P.A., 42030 Viano (Reggio Emilia) (IT)
(74) Representative: Corradini, Corrado

(56) References cited:
- EP-A- 1 151 944
- DE-A- 19 609 959
- US-A- 5 733 100

## Description

The present invention relates in general to an automatic system for sorting and palletizing articles, in particular light articles of poor stability. A typical application is for articles consisting of packages of two or more rolls of paper wrapped by a plastic film.

Certain systems firstly organize the articles (for example the said paper roll packages) into "clusters" (in the form of a predetermined number of articles placed side by side), which are then arranged to form a layer of articles having a predetermined geometrical plan configuration; these layers are finally superimposed to form a stack.

To obtain each said "cluster" of articles starting from a predetermined number of individual articles, traditional sorting and palletizing systems use a feed belt conveyor which, by undergoing a predetermined angular rotation, arranges the articles side by side on terminal conveyor belts, to form said cluster of articles. An automatic means then withdraws said article clusters from their predefined station on the terminal conveyor belts and transfers them to the next station where horizontal layers of articles composed of a predetermined geometrical plan configuration of clusters are formed. Finally another automatic unit positions said layers on suitable pallets, one on the other, for their possible wrapping with film.

A system for sorting and palletizing articles is shown in DE 196 09 959 A wherein the articles are released by a feed means onto a belt station through a vertical descent, are therein arranged side by side and are then transferred to rotating means in order to form layer of articles having a predetermined geometrical plan configuration.

Said sorting and palletizing systems are very noisy, they operate at a low rate (they are unable to exceed 100 positionings per minute), and are very large; a further drawback is the poor flexibility of said system, because to increase the number of articles forming a cluster, the number of terminal conveyor belts has to be increased.

An object of the present invention is to overcome the said drawbacks within the framework of a simple and rational solution. This object is attained using the features defined in claim 1. The further embodiments as set out in the dependent claims solve inter alia, the problem of low rate (it exceeds 130 positionings per minute) and noisiness by using suitable means able to withdraw the articles from the feed belt and position them preferably on two terminal conveyor belts, on which article clusters are formed alternately one after the other; said means are operated by silent magnetic linear guide motors of high operating speed and without risk of wear.

The characteristics and constructional merits of the invention will be apparent from the ensuing detailed description given with reference to the figures of the accompanying drawings, which illustrate a particular preferred embodiment thereof by way of non-limiting example.

Figure 1 is a plan view of the system of the invention.

Figure 2 is an enlarged detail of the invention of Figure 1.

Figure 3 is a front vertical elevation of Figure 2.

Figure 4 is a perspective view of Figure 2.

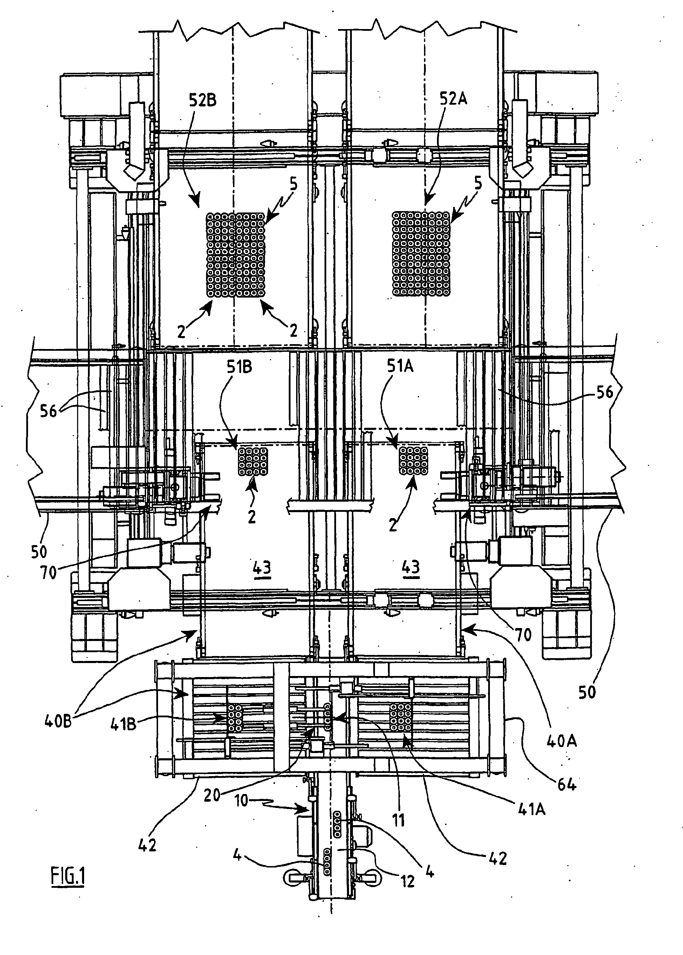

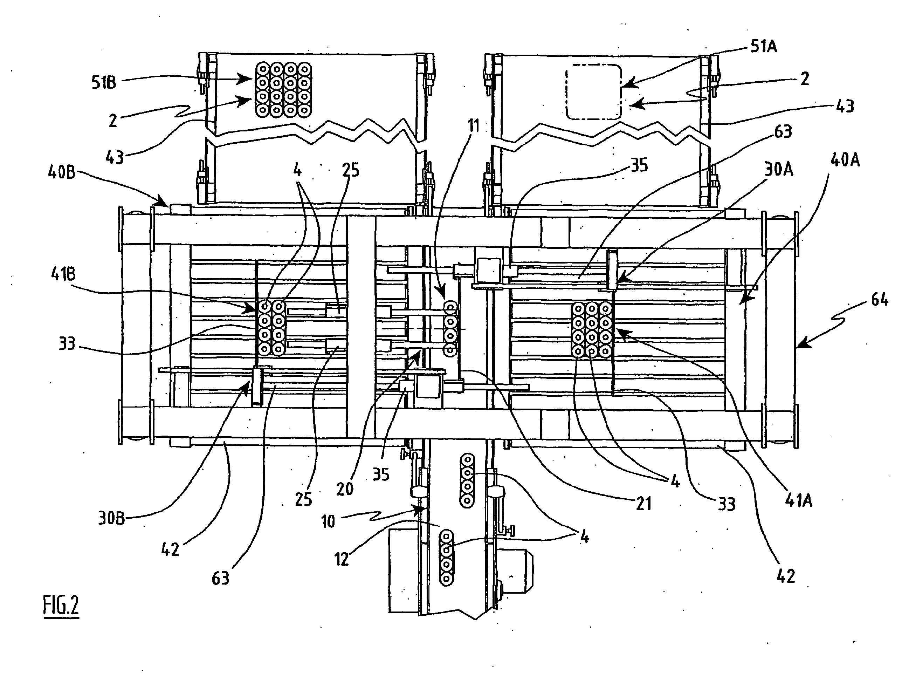

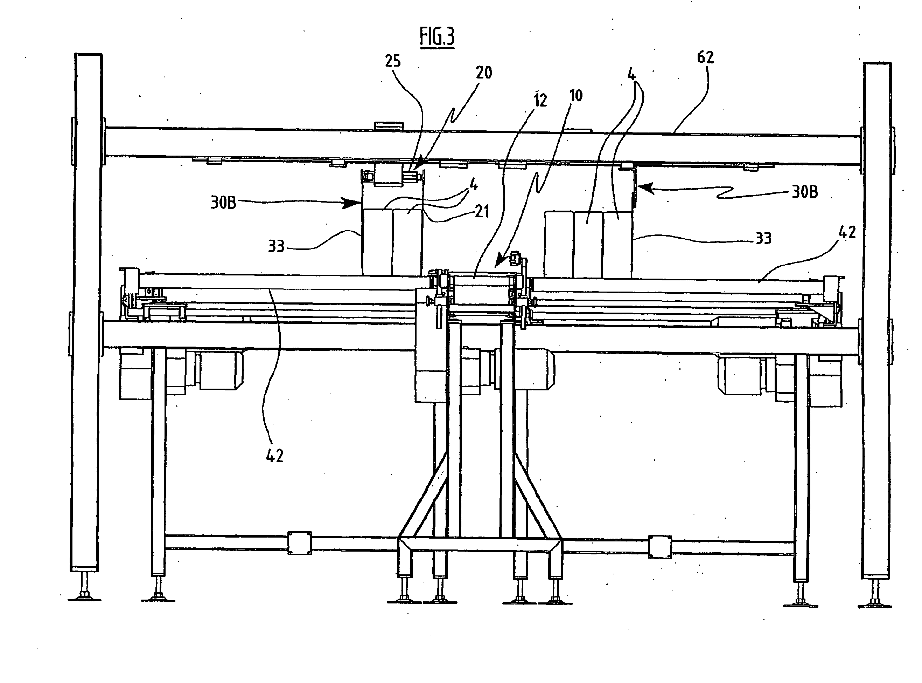

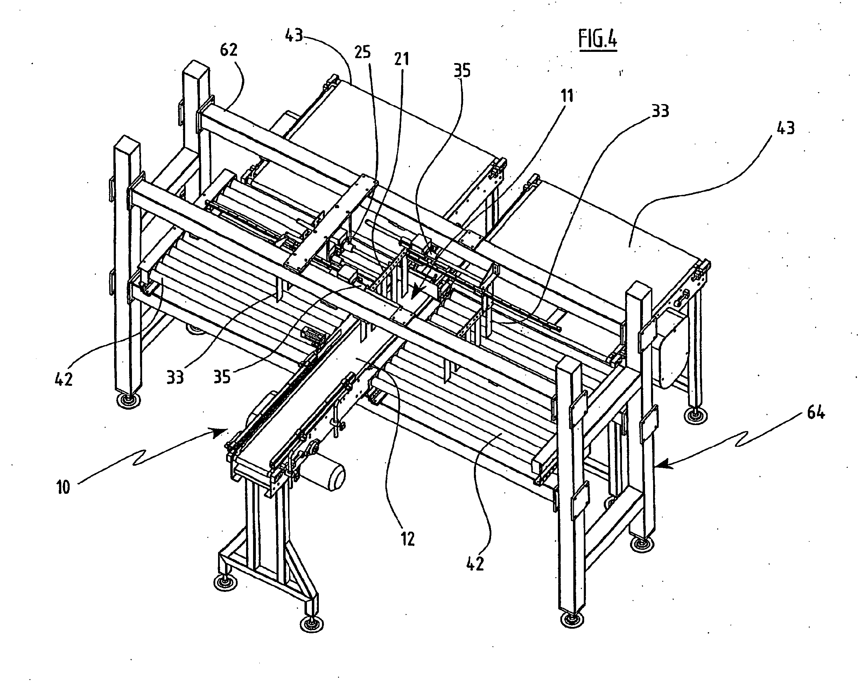

The automatic system for sorting and palletizing light articles of poor stability, shown in Figures 1 to 4, comprises: a feed means 10, comprising a horizontal movable belt 12 for advancing articles 4 (e.g. each consisting in a group formed of two or more rolls of paper wrapped by a plastic film) towards a first station 11 defined at the downstream end of the belt 12; and a thrust means 20 arranged to thrust said articles 4 from the first station 11 to one or two second stations 41 A, 41 B in a direction transverse to the direction of advancement of the feed means 10. In the illustrated embodiment, the second stations 41A and 41 B are two in number and are positioned symmetrical to each other about the advancement direction of the feed means 10; the thrust means 20 alternately thrusts the article 4 from the first station 11 to the first 41A of said two second stations, and then the next article 4 from the first station 11 to the second 41 B of said two second stations.

The second stations 41A, 41B comprise counteracting means 30A, 30B which act as side walls for the articles 4 while being thrust by the thrust means 20. Laterally to the first station 11, on each of its two opposing sides, there are positioned transfer means 40A, 40B comprising a motorized roller table 42 (on which the second stations 41 A, 41 B are located) and a conveyor band 43, placed in line to define a horizontal movable surface for transferring the articles 4 from each of the second stations 41A, 41 B towards a respective third station 51A, 51 B. Said transfer means 40A, 40B are two in number, as are said counteracting means 30A. 30B; the first 40A of said transfer means and the first 30A of said counteracting means are positioned on the same side as the first 41A of the second stations 41A, 41B, the second 40B of said transfer means and the second 30B of said counteracting means being positioned on the same side as the second station 41B.

Said thrust means 20 comprises a movable thrust member 21, defined by rigid blades projecting perpendicular to the surface of the belt 12 and acting on the lateral sides of the articles 4; the thrust means 20 is moved, in a direction transverse to the advancement direction of the feed means 10, from one to the other of the second stations 41A and 41 B, by passing through the first station 11.

Each counteracting means 30A, 30B comprises a respective movable counteracting member 33, defined by rigid blades projecting perpendicular to the second station 41A, 41 B to act on the lateral sides of the articles 4; the counteracting means 30A, 30B is driven in a direction transverse to the direction of advancement of the feed means 10, above the respective second station 41A, 41 B.

The thrust means 20 and the counteracting means 30A, 30B are operated by actuators 25 and 35 respectively, controlled by a control system to act synchronously to maintain the articles 4 tightly clamped between the movable counteracting member 33 and the movable thrust member 21. The individual article 4 (i.e. a group formed by a number of items wrapped together) located in the first station 11 is thrust by the movable thrust member 21 towards the movable stop defined by the movable counteracting member 33; in this manner it reaches the first 41A of the two second stations; the movable thrust member 21 then returns to the first station 11, where in the meantime another article 4 has arrived, and thrusts it, in collaboration with the movable counteracting member 33, in the already described manner, towards the other second station 41B. The said cycle is repeated until in both the two second stations 41A, 41 B a cluster 2 has formed composed of a predetermined number (for example four, as in the example shown in the figures) of articles.

The counteracting means 30A, 30B and the thrust means 20 are positioned in the upper part of a frame 64 which is traversed by the horizontal moving belt 12 of the feeder 10; said means are driven by the actuators 35 and 25 respectively, consisting of magnetic motors which slide on a linear guide 63, while rigidly secured to the movable counteracting member 33 and thrust member 21, via an upper horizontal frame 62. Said blades are disposed vertically, movable along the entire upper surface of the motorized roller table 42 of the transfer means 40A, 40B, formed from motorized rollers disposed along the movement direction of the articles 4, such as to move the clusters 2, formed from said articles 4, in the direction transverse to said movement direction.

Said feed means 10, thrust means 20 and transfer means 40A are controlled by a control system which controls the predetermined number of articles 4 forming the cluster 2, and sets the operation of the transfer means 40A, 40B such that the cluster 2 is moved towards the predefined station 51A, 51 B, after being formed in the second station 41A, 41 B by the thrust means 20.

Finally the sorting and palletizing system of the invention comprises an automatic withdrawal means 70 (of known type) to withdraw a cluster 2 of articles 4 from each third station 51A, 51 B and to transfer them into a respective subsequent station 52A and 52B, where the same means 70 forms a layer of clusters 2 having a predetermined geometrical plan configuration. Finally another automatic unit positions said layers 5 on suitable pallets, one on the other, for possible wrapping with film.

In the embodiment shown in Figure 1, a lateral entry conveyor 50 is provided operating alternately with the feed means 10; the conveyor band 43 of the transfer means 40A, 40B is able to oscillate upwards to free the underlying region occupied by a lateral entry conveyor 50. Two entry conveyors 50 are provided, each of which is able to convey articles 4 to the third station 51A, 51B; said station is no longer positioned on the surface of the conveyor band 43, but directly on the moving rollers 56 of the lateral entry conveyor 50.

## Claims

1. An automatic system for sorting and palletizing light articles, comprising:
a feed means (10) feeding the articles (4) toward a first station (11), the feed means (10) being for delivering articles (4), one at a time, into the first station (11) in a horizontal feeding direction;
a thrust means (20) for thrusting said articles (4) from the first station (11) to at least one second station (41A, 41B) in a direction transverse to the advancement direction of the feed means (10);
at least one transfer means (40A, 40B) for transferring the articles (4) located in the second station (41A, 41B) to a third station (51A, 51B);
at least one automatic withdrawal means (70) for withdrawing a cluster of a predetermined number of articles (4) from the third station (51A, 51B) and transferring them into a subsequent station (52A, 52B) to form a layer (5) of articles having a predetermined geometrical plan configuration;
said feed means (10), said thrust means (20) and said transfer means (40A, 40B) being controlled by a control system which regulates the predetermined number of articles which, by the action of the thrust means (20), form a cluster (2) in the second station (41A, 41B), and sets the operation of the transfer means (40A, 40B) such that said cluster (2) is moved towards the third station (51A, 51B),
comprising a counteracting means (30A, 30B) operating within each second station to act as a side wall for the articles (4) thrust by the thrust means (20).

2. A system as claimed in claim 1, **characterised by** comprising two second stations (41A, 41B) positioned symmetrical to each other about the advancement direction of the feed means (10), the thrust means (20) alternately thrusting the article (4) from the first station (11) to the first (41A) of said two second stations, and then the next article (4) from the first station (11) to the second (41B) of said two second stations.

3. A system as claimed in claims 2, **characterised by** comprising two transfer means (40A, 40B) and two counteracting means (30A, 30B), the first (40A) of said transfer means and the first (30A) of said counteracting means being positioned on the same side as the first (41A) of the second stations (41A, 41B), the second (40B) of said transfer means and the second (30B) of said counteracting means being positioned on the same side as the second station (41B).

4. A system as claimed in claim 1, **characterised in that** the thrust means (20) comprises at least one movable thrust member (21) positioned projecting above the second station (41A, 41B).

5. A system as claimed in claim 1, **characterised in that** the movable thrust member (21) is defined by rigid blades disposed vertically to the second station (41A, 41B).

6. A system as claimed in claim 2, **characterised in that** the counteracting means (30A, 30B) comprises at least one movable counteracting member (33) positioned projecting above the second station (41A, 41B).

7. A system as claimed in claim 6, **characterised in that** the movable counteracting member (33) is defined by rigid blades disposed vertically to the second station (41A, 41B).

8. A system as claimed in claims 4 and 6, **characterised in that** said thrust means (20) and said counteracting means (30A, 30B) are operated by actuators controlled by a control system to act synchronously to maintain the group of articles (4) tightly clamped between the movable counteracting member (33) and the movable thrust member (21).

9. A system as claimed in claim 1, **characterised in that** the second station (41A, 41B) is positioned on a motorized roller table (42) of the transfer means (40A, 40B).

10. A system as claimed in claim 1, **characterised in that** the third station (51A, 51B) is positioned on the surface of a conveyor band (43) able to oscillate upwards to free the underlying region occupied by a lateral entry conveyor (50).

## Patentansprüche

1. Ein automatisches System zum Sortieren und Palettieren leichter Artikel, einschließlich:
Einer Zuführeinrichtung (10), welche die Artikel (4) einer ersten Station (11) zuführt, wobei die Zuführeinrichtung (10) die Artikel (4) einzeln in einer horizontalen Vorschubrichtung in die erste Station (11) befördert;
Einer Schubeinrichtung (20) zum Schieben der Artikel (4) von der ersten Station (11) zu wenigstens einer zweiten Station (41A, 41B) quer zur Vorschubrichtung der Zuführeinrichtung (10);
Wenigstens einer Übertragungseinrichtung (40A, 40B) zum Übertragen der Artikel (4) aus der zweiten Station (41A, 41B) in eine dritte Station (51A, 51B);
Wenigstens einer automatischen Rückzugseinrichtung (70) zum Rückziehen einer Gruppe einer vorgegebenen Anzahl an Artikeln (4) aus der dritten Station (51A, 51B) und deren Übertragung in eine nachgelagerte Station (52A, 52B) zum Bilden einer Schicht (5) aus Artikeln in einer vorbestimmten geometrischen Anordnung;
Die Zuführeinrichtung (10), die Schubeinrichtung (20) und Übertragungseinrichtung (40A, 40B) werden von einem Kontrollsystem überwacht, das die vorbestimmte Anzahl an Artikeln einstellt, die durch das Wirken der Schubeinrichtung (20) eine Gruppe (2) in der zweiten Station (41A, 41B) bilden, und die Übertragungseinrichtung (40A, 40B) in Betrieb setzt, so dass die Gruppe (2) zur dritten Station (51A, 51B) bewegt wird,
einschließlich einer Gegenwirkungseinrichtung (30A, 30B) in jeder zweiten Station als Seitenwand für die Artikel (4), die von den Schubeinrichtungen (20) vorwärts geschoben werden.

2. Ein System nach Patentanspruch 1, **dadurch gekennzeichnet, dass** es zwei zweite Stationen (41A, 41B) enthält, die symmetrisch zueinander in Vorschubrichtung der Zuführeinrichtung (10) angeordnet sind, wobei die Schubeinrichtung (20) abwechselnd den Artikel (4) aus der ersten Station (11) in die erste (41A) der beiden zweiten Stationen schiebt und dann den nächsten Artikel (4) aus der ersten Station (11) in die zweite (41B) der beiden zweiten Stationen.

3. Ein System nach Patentanspruch 2, **dadurch gekennzeichnet, dass** es zwei Übertragungseinrichtungen (40A, 40B) und zwei Gegenwirkungseinrichtungen (30A, 30B) enthält, wobei die erste (40A) der Übertragungseinrichtungen und die erste (30A) der Gegenwirkungseinrichtungen auf der gleichen Seite angeordnet sind wie die erste (41A) der zweiten Stationen (41A, 41B), die zweite (40B) der Übertragungseinrichtungen und die zweite (30B) der Gegenwirkungseinrichtungen dagegen auf der gleichen Seite wie die zweite Station (41B).

4. Ein System nach Patentanspruch 1, **dadurch gekennzeichnet, dass** die Schubeinrichtung (20) wenigstens ein bewegliches Schubelement (21) enthält, das überstehend auf der zweiten Station (41A, 41B) angeordnet ist.

5. Ein System nach Patentanspruch 1, **dadurch gekennzeichnet, dass** das bewegliche Schubglied (21) durch starre Klingen definiert ist, die vertikal zur zweiten Station (41A, 41B) angeordnet sind.

6. Ein System nach Patentanspruch 2, **dadurch gekennzeichnet, dass** die Gegenwirkungseinrichtung (30A, 30B) wenigstens ein bewegliches entgegenwirkendes Element (33) enthält, das überstehend auf der zweiten Station (41A, 41B) angeordnet ist.

7. Ein System nach Patentanspruch 6, **dadurch gekennzeichnet, dass** das bewegliche entgegenwirkende Element (33) durch starre Klingen definiert ist, die vertikal zur zweiten Station (41A, 41B) angeordnet sind.

8. Ein System nach Patentanspruch 4 und 6, **dadurch gekennzeichnet, dass** die Schubeinrichtung (20) und die Gegenwirkungseinrichtung (30A, 30B) von einem Stellglied betätigt werden, das von einem Kontrollsystem überwacht wird, so dass sie synchron wirken und die Artikelgruppe (4) fest zwischen dem beweglichen entgegenwirkenden Element (33) und dem beweglichen Schubelement (21) gespannt ist.

9. Ein System nach Patentanspruch 1, **dadurch gekennzeichnet, dass** die zweite Station (41A, 41B) auf einem motorbetriebenem Rollgang (42) der Übertragungseinrichtung (40A, 40B) angeordnet ist.

10. Ein System nach Patentanspruch 1, **dadurch gekennzeichnet, dass** die dritte Station (51A, 51B) auf einem Förderband (43) angeordnet ist, das sich aufwärts bewegen lässt, um die darunterliegende Zone mit einem seitlichen Eingangsförderer (50) freizulegen.

## Revendications

1. Un système automatique pour le tri et la palettisation d'articles légers, comprenant :
un dispositif d'alimentation (10) alimentant les articles (4) vers une station primaire (11), le dispositif d'alimentation (10) servant à fournir les articles (4), un à la fois, dans la station primaire (11) dans une direction d'alimentation horizontale ;
un dispositif de poussée (20) pour pousser lesdits articles (4) de la station primaire (11) vers au moins une station secondaire (41A, 41B) dans une direction transversale à la direction d'avancement du dispositif d'alimentation (10) ;
au moins un dispositif de transfert (40A, 40B) pour transférer les articles (4) situés dans la station secondaire (41A, 41B) vers une troisième station (51A, 51 B) ;
au moins un dispositif de retrait automatique (70) pour le retrait d'un bloc d'un nombre prédéfini d'articles (4) de la troisième station (51A, 51 B) et le transfert de ces articles vers une station suivante (52A, 52B) pour former une couche (5) d'articles ayant une configuration plane géométrique prédéfinie ;
ledit dispositif d'alimentation (10), ledit dispositif de poussée (20) et ledit dispositif de transfert (40A, 40B) sont contrôlés par un système de contrôle qui régule le nombre prédéfini d'articles qui, par l'action du dispositif de poussée (20), forment un bloc (2) dans la station secondaire (41A, 41B), et définit le fonctionnement du dispositif de transfert (40A, 40B) de sorte que ledit bloc (2) est déplacé vers la troisième station (51A, 51 B),
comprenant un dispositif de contrebalancement (30A, 30B) fonctionnant au sein de chaque station secondaire pour servir de paroi latérale pour les articles (4) poussés par le dispositif de poussée (20).

2. Un système selon la revendication 1, **caractérisé par le fait qu'**il comprend deux stations secondaires (41A, 41B) positionnées de manière symétrique l'une par rapport à l'autre selon la direction d'avancement du dispositif d'alimentation (10), le dispositif de poussée (20) poussant alternativement l'article (4) de la station primaire (11) vers la première (41A) desdites deux stations secondaires, puis l'article suivant (4) de la station primaire (11) vers la deuxième (41 B) desdites deux stations secondaires.

3. Un système selon la revendication 2, **caractérisé par le fait qu'**il comprend deux dispositifs de transfert (40A, 40B) et deux dispositifs de contrebalancement (30A, 30B), le premier (40A) desdits dispositifs de transfert et le premier (30A) desdits dispositifs de contrebalancement étant positionnés du même côté que la première (41A) des stations secondaires (41A, 41B), le deuxième (40B) desdits dispositifs de transfert et le deuxième (30B) desdits dispositifs de contrebalancement étant positionnés du même côté que la deuxième station (41B).

4. Un système selon la revendication 1, **caractérisé par le fait que** le dispositif de poussée (20) comprend au moins un membre de poussée mobile (21) positionné en projection au-dessus de la station secondaire (41A, 41 B).

5. Un système selon la revendication 1, **caractérisé par le fait que** le membre de poussée mobile (21) est défini par des lames rigides disposées à la verticale par rapport à la station secondaire (41A, 41B).

6. Un système selon la revendication 2, **caractérisé par le fait que** le dispositif de contrebalancement (30A, 30B) comprend au moins un membre de contrebalancement mobile (33) positionné en projection au-dessus de la station secondaire (41A, 41B).

7. Un système selon la revendication 6, **caractérisé par le fait que** le membre de contrebalancement mobile (33) est défini par des lames rigides disposées à la verticale par rapport à la station secondaire (41A, 41B).

8. Un système selon les revendications 4 et 6, **caractérisé par le fait que** ledit dispositif de poussée (20) et ledit dispositif de contrebalancement (30A, 30B) sont déplacés par des actionneurs contrôlés par un système de contrôle afin d'agir de manière synchronisée pour maintenir le groupe d'articles (4) fermement serré entre le membre de contrebalancement mobile (33) et le membre de poussée mobile (21).

9. Un système selon la revendication 1, **caractérisé par le fait que** la station secondaire (41A, 41 B) est positionnée sur une table à rouleaux motorisée (42) du dispositif de transfert (40A, 40B).

10. Un système selon la revendication 1, **caractérisé par le fait que** la troisième station (51A, 51B) est positionnée sur la surface d'un convoyeur à bande (43) capable d'osciller vers le haut pour libérer la zone au-dessous occupée par un convoyeur à entrée latérale (50).
